Europäisches Patentamt

European Patent Office

Office européen des brevets

(11) Publication number: **0 146 253**
**B1**

# EUROPEAN PATENT SPECIFICATION

(45) Date of publication of patent specification: **20.04.88**

(21) Application number: **84307652.2**

(22) Date of filing: **06.11.84**

(51) Int. Cl.⁴: **F 16 D 3/14,** F 16 D 13/38, B 60 K 17/02

(54) **Two-stage clutch damper assembly.**

(30) Priority: **30.11.83 US 556519**

(43) Date of publication of application:
**26.06.85 Bulletin 85/26**

(45) Publication of the grant of the patent:
**20.04.88 Bulletin 88/16**

(84) Designated Contracting States:
**DE FR GB IT SE**

(56) References cited:
**FR-A-2 361 575**
**GB-A-1 441 688**
**GB-A-2 078 906**
**US-A-3 983 982**

(73) Proprietor: **BORG-WARNER CORPORATION**
**200 South Michigan Avenue**
**Chicago Illinois 60604 (US)**

(72) Inventor: **Lech, Thaddeus, Jr.**
**23800 Middlebelt Road Apt. No. 1**
**Farmington Hills Michigan 48024 (US)**
Inventor: **Frantz, Robert Arthur**
**1134 Bishop**
**Grosse Pointe Park Michigan 48230 (US)**

(74) Representative: **Allden, Thomas Stanley et al**
**A.A. THORNTON & CO. Northumberland House**
**303-306 High Holborn**
**London WC1V 7LE (GB)**

EP 0 146 253 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to a clutch damper assembly.

In a conventional friction clutch for the drive train of an automotive vehicle, the engine has power and inertia impulses which drive the engaged clutch with an irregular series of thrusts when the transmission is in neutral and the engine is at idle rpm. These impulses will be transmitted through the input shaft to the transmission gears which become excited, resulting in oscillation through their backlash space to produce objectionable rattle.

There is generally disclosed in GB—A—2078906 (Figures 21 to 25) a clutch damper assembly for an automotive vehicle clutch; the clutch damper assembly comprising a multi-part hub assembly having an inner hub with internal axial splines for receiving an externally axially splined transmission input shaft, an outer hub having internal helical teeth interchanging with external helical teeth on the inner hub to cause axial movement of the inner hub against the bias of compression springs upon rotation of the outer hub relative to the inner hub, and a radial flange with equally spaced spring windows therein; the clutch damper assembly further comprising a clutch plate carrying friction facings at the outer periphery thereof, a spring retainer plate secured to the clutch plate to sandwich the radial flange therebetween, the clutch and spring retainer plates having circumferentially spaced windows therein axially aligned with the spring windows in the radial flange, and damper springs received in each set of axially aligned spring windows in the clutch and spring retainer plates and the radial flange.

More particularly, in the aforesaid generally disclosed clutch damper assembly, the radial flange is integral with the outer hub. Such a construction is operable to dissipate the engine impulses occurring when the transmission is in neutral and the engine is idling. At that time, with the clutch engaged, the engine impulses act to rotate the clutch and spring retainer plates and via the damper springs and radial flange also the outer hub. Because of the helical connection between the outer and inner hubs, such rotation of the outer hub will not cause rotation of the inner hub and hence the transmission input shaft but, rather, the inner hub will move axially along the input shaft, by which to dissipate the engine impulses.

The aforesaid particularly disclosed clutch damper assembly of GB—A—2078906 represents one approach to the problem of dissipating engine impulses.

Another solution to such problem is provided by the present invention as claimed in which the aforesaid generally disclosed clutch damper assembly is characterised by the provision of a second inner hub whose hub barrel has an internally axially splined opening for receiving the transmission shaft, the compression springs bias the first-mentioned and second inner hubs apart, the radial flange is integral with the hub barrel of the second inner hub, the spring windows in the radial flange are peripheral notches which extend circumferentially beyond the spring windows in the clutch and spring retainer plates to allow a limited rotation of the clutch and spring retainer plates and damper springs relative to the second inner hub without compression of the damper springs, the outer hub has a radial flange located between the clutch plate and the radial flange of the second inner hub, and the outer hub radial flange terminates in a periphery with notches encompassing the damper springs so that the rotation of the plates and damper springs relative to the second inner hub causes rotation of the outer hub relative to the first inner hub.

Again, therefore, when the transmission is in neutral and the engine is idling, rotation of the outer hub will cause it to rotate relative to this (first) inner hub and hence cause the first inner hub to move axially along the transmission input shaft rather than rotate the shaft, with the result that the engine impulses become dissipated in a first-stage operation of the clutch damper assembly. It is not until the lost motion provided by the circumferentially oversized peripheral notches in the second inner hub is taken up that the damper springs rotated with the clutch and retainer plates will, in a second stage operation of the clutch damper assembly, cause concomittant rotation of the second inner hub with consequential rotation of the transmission input shaft.

Preferably, the notches in the radial flange of the second inner hub have radially inwardly arcuate slots, and rearwardly extending lugs are formed on the outer hub radial flange to project into those slots. Thereby, provision is made for rotational drive between the outer and second inner hubs.

More particularly, the arcuate slots may extend circumferentially beyond the lugs in one direction to allow for limited lost motion during the period the clutch and spring retainer plates rotate with the damper springs relative to the second inner hub. At the end of that time, rotation of the second inner hub and hence of the transmission input shaft will effect direct rotation of the outer hub. Therefore, the outer hub will be rotated with the first inner hub which will be rotationally driven by the transmission input shaft, thereby preventing stripping of the helical teeth between the outer hub and the first inner hub and preventing the first inner hub from being driven forward out of engagement with the outer hub.

In order that the invention may be well understood there will now be described an embodiment thereof, given by way of example, reference being had to the accompanying drawings, in which:

Figure 1 is a rear elevational view with portions broken away of a two-stage clutch damper assembly embodying the present invention;

Figure 2 is a cross sectional view of the same assembly taken on the irregular line 2—2 of Figure 1;

Figure 3 is a rear elevational view of the main or second inner hub utilized in the present assembly;

Figure 4 is a cross sectional view of the same hub taken on the irregular line 4—4 of Figure 3;

Figure 5 is a partial front elevational view of the same hub;

Figure 6 is a rear elevational view of the outer or intermediate hub of the present assembly;

Figure 7 is a cross sectional view taken on the irregular line 7—7 of Figure 6;

Figure 8 is a side elevational view of the first inner hub of the present assembly; '

Figure 9 is a rear elevational view of the first inner hub of Figure 8; and

Figure 10 is a cross sectional view taken on the irregular line 10—10 of Figure 9.

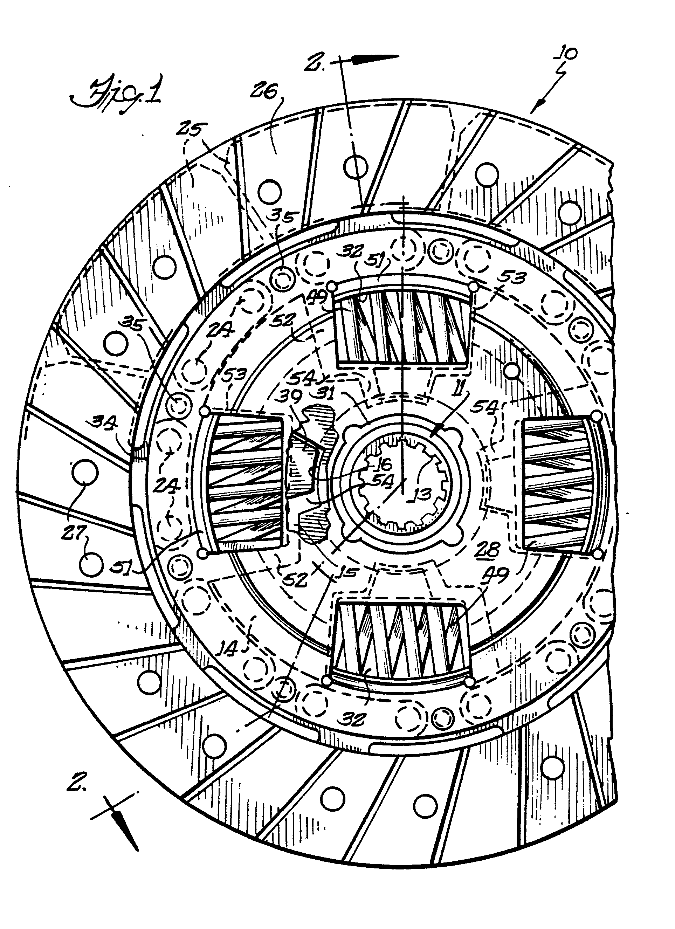

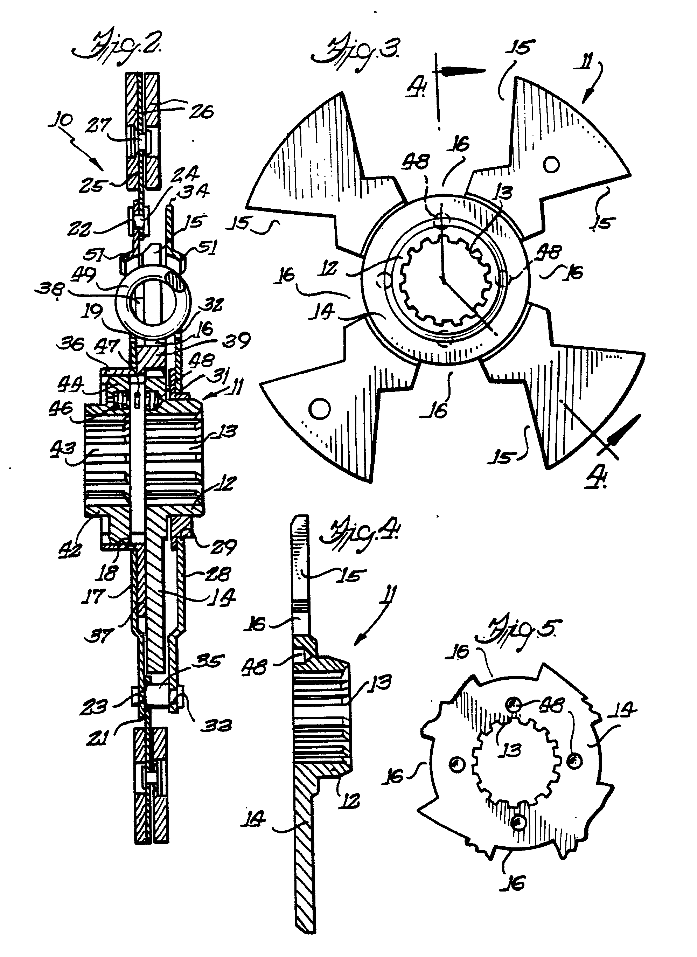

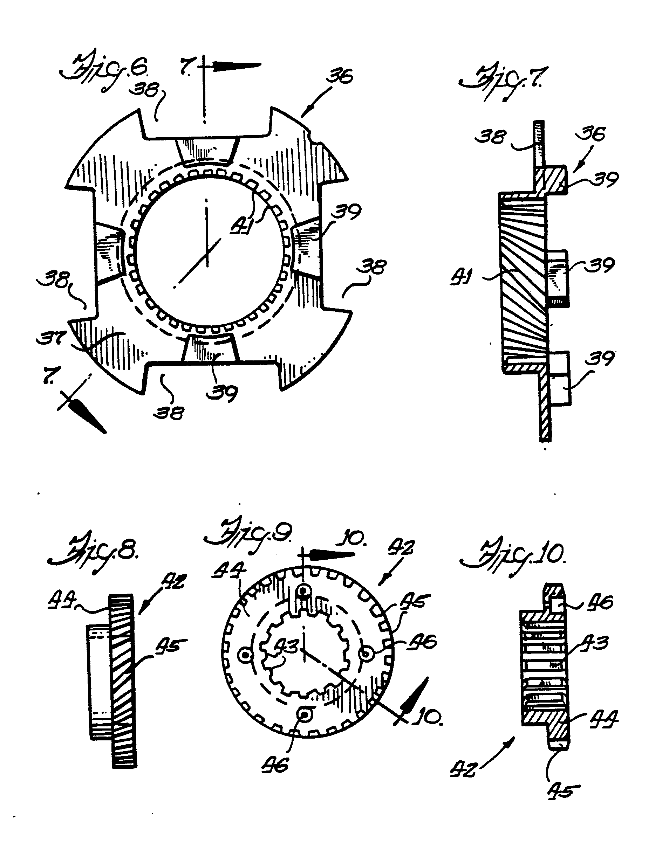

Referring first to Figures 1 and 2, a two-stage clutch damper assembly 10 includes a second inner or main hub 11, a clutch plate 17 carrying friction facings 26 mounted on the periphery thereof and adapted to be positioned between friction surfaces of a flywheel and a pressure plate (not shown) for the vehicle clutch, and a spring retainer plate 28. The hub 11 (Figures 3, 4 and 5) includes a barrel 12 with an axially splined central opening 13 for receiving the externally axially splined end of a transmission input shaft (not shown) and an integral radial flange 14 having a plurality of circumferentially equally spaced spring windows in the form of arcuate notches 15, and each notch has a radially inwardly extending arcuate slot 16 adjacent the barrel 12 for a purpose to be later described.

The clutch driven plate 17 has a central opening 18, a plurality of circumferentially equally spaced spring windows 19, and a plurality of openings 22 and 23 adjacent the periphery 21 of the plate. The openings 22 receive rivets 24 for securement of cushioning plates 25 carrying the opposed friction facings 26 for the clutch secured thereto by rivets 27.

The spring retainer plate 28 has a central opening 29 to receive a piloting bushing 31 journalled on the hub barrel 12, a plurality of circumferentially equally spaced arcuate spring windows 32 axially aligned with the notches 15 and windows 19 of the hub and clutch plate, respectively, and a plurality of openings 33 in the periphery 34 thereof axially aligned with openings 23 to receive spacer rivets 35 to secure the clutch plate 17 and spring retainer plate 28 together; the rivets being positioned radially beyond the periphery of the hub flange 14 (Figures 1 and 2). The piloting bushing 31 is utilized so that the hub is piloted concentric in the assembly. The bushing or spacer may be formed of a suitable plastic material and, although not shown, one or more friction washers may be located between the hub flange and bushing if additional frictional lag force is desired.

The circular outer or intermediate hub 36 (Figures 6 and 7) is positioned concentrically within the central opening 18 of the clutch driven plate 17 and has a radial flange 37 at the rear edge with circumferentially equally spaced notches 38, and a rearwardly extending lug 39 radially aligned with each notch. The internal surface of the hub 36 is provided with left hand 45° helical teeth 41 acting to cooperate with mating external left hand helical teeth 45 on a first inner hub 42.

The first inner hub 42 (Figures 8, 9 and 10) is generally cylindrical with internal axial splines 43 for receiving the splined end of the transmission input shaft and has a radial flange 44 with the helical teeth 45 formed on the periphery thereof. Also formed in the flange are spaced pockets 46 to receive compression springs 47 extending into spring recesses or pockets 48 formed in the main inner hub 11 facing and axially aligned with the pockets 46. These springs 47 serve the dual function of normally biasing the main inner hub 11 and the first inner hub 42 apart and of aligning the splines 13 and 43 in the central openings of the hub barrel 12 and the first inner hub 42, respectively.

One or more concentric damper springs 49 are located in each aligned set of spring windows 19 and 32 in the plates and window notches 15 in the hub flange 14 with the plate windows 19 and 32 having inwardly inclined lips 51 to retain the springs in operative position. As seen in Figure 1, the notches 15 in the hub flange 14 are enlarged relative to the clutch and spring retainer plate windows in the drive direction at 52 and by a smaller amount in the coast direction at 53. The function of the enlarged windows will become more apparent when considering operation of the assembly. The springs 47 are 90° out of plane with the normal damper springs 49 to break up harmonic influence and resonance by changing the plane of motion. Also, the lugs 39 project into the arcuate slots 16 and are of such dimensions as to provide a lost motion space 54 (Figure 1) for a purpose to be later described.

In the normal position of the multi-part assembly with the clutch disengaged, as seen in Figure 2, the springs 47 urge the first inner hub 42 forwardly away from the main or second hub 11 with the helical teeth 41, 45 fully engaged, and the notches 38 on the intermediate or outer hub 36 encompassing the damper springs 49. This clutch assembly operates in the same manner as a conventional assembly except for the action of the hubs 36 and 42 at idle rpm and in neutral transmission position. With the clutch engaged between the flywheel and pressure plate, the engine impulses during idle act to rotate the clutch plate 17, spring retainer plate 28 and damper springs 49 relative to the main hub 11 due to the enlarged portion 52 of the spring notches 15, with the outer hub 36 being rotated by the damper springs 49 located within the notches 38. The mating helical teeth 41, 45, upon rotation of the outer hub 36 causes the first inner hub 42 to move axially rearwardly on the transmission input shaft against the force of the compression springs 47, with the lugs 39 moving in the spaces 54 in the arcuate slots 16. Movement continues until the damper springs strike the ends of the enlarged portion of the hub flange spring windows. The energy of the impulses is used to actuate the first inner hub in the above manner rather than transmit the undiminished impulses to the vehicle transmission to cause its gears to rattle. In the normal driving mode of the vehicle, movement of the lugs 39 in the slots 16 is timed to drive the intermediate hub 36 in the same rotational direction as the inner first hub member 42 when the normal damper operates so that the helical teeth will not be stripped or the inner hub will not be driven out the end of the outer hub 36.

This assembly eliminates the "in plane" space which occurs when the cam of EP—A—0151 338 published 14 August 1985 goes into float with high frequency, high amplitude excitation typical in drivelines with diesel engines. When the cam goes into float, the device can establish a state of resonance through the "in plane" space between the cam and ramp surfaces as they become disengaged. The helical intermediate hub teeth mesh to trap the helical inner hub teeth so that no "in plane" space can occur and so that the first inner hub cannot go into float since it is mechanically driven to follow the action of the intermediate hub.

**Claims**

1. A clutch damper assembly for an automotive vehicle clutch; the clutch damper assembly comprising a multi-part hub assembly (14, 36, 42) having an inner hub (42) with internal axial splines (43) for receiving an externally axially splined transmission input shaft, an outer hub (36) having internal helical teeth (41) interengaging with external helical teeth (45) on the inner hub to cause axial movement of the inner hub against the bias of compression springs (47) upon rotation of the outer hub relative to the inner hub, and a radial flange (14) with equally spaced windows (15) therein; the clutch damper assembly further comprising a clutch plate (17) carrying friction facings (26) at the outer periphery thereof, a spring retainer plate (28) secured to the clutch plate to sandwich the radial flange therebetween, the clutch and spring retainer plates having circumferentially spaced windows (19, 32) therein axially aligned with the spring windows in the radial flange, and damper springs (49) received in each set of axially aligned spring windows in the clutch and spring retainer plates and the radial flange; characterised by the provision of a second inner hub (11) whose hub barrel (12) has an internally axially splined opening for receiving the transmission shaft, the compression springs bias the first-mentioned and second inner hubs apart, the radial flange is integral with the hub barrel of the second inner hub, the spring windows in the radial flange are peripheral notches (15) which extend circumferentially beyond the spring windows in the clutch and spring retainer plates to allow a limited rotation of the clutch and spring retainer plates and damper springs relative to the second inner hub without compression of the damper springs, the outer hub has a radial flange (37) located between the clutch plate and the radial flange of the second inner hub, and the outer hub radial flange terminates in a periphery with notches (38) encompassing the damper springs so that the rotation of the plates and damper springs relative to the second inner hub causes rotation of the outer hub relative to the first inner hub.

2. A clutch damper assembly as claimed in claim 1, including axially aligned facing pockets (46, 48) formed in the first inner hub (42) and the second inner hub (11), the compression springs (47) biasing the first and second inner hubs apart being received in the pockets.

3. A clutch damper assembly as claimed in claim 1 or claim 2, wherein the second inner hub flange notches (15) have radially inwardly arcuate slots (16), and rearwardly extending lugs (39) formed on the outer hub flange (37) project into the slots.

4. A clutch damper assembly as claimed in claim 3, wherein the arcuate slots (16) extend circumferentially beyond the lugs (39) in one direction to allow for limited lost motion when the clutch and spring retainer plates (17, 28) rotate relative to the second inner hub (11).

5. A clutch damper assembly as claimed in any of the preceding claims, wherein the interengaging helical teeth (41, 45) are left-handed at 45°.

6. A clutch damper assembly as claimed in any of the preceding claims, wherein the first inner hub (42) has a radial flange (44) terminating in the helical teeth (45).

**Patentansprüche**

1. Kupplungsdämpferanordnung für eine Kraftfahrzeugskupplung, mit einer mehrteiligen Nabenanordnung (14, 36, 42) mit einer inneren Nabe (42) mit inneren axialen Keilen (43) zur Aufnahme einer außen axial verkeilten Getriebeeingangswelle, einer äußeren Nabe (36) mit inneren wendelförmigen Zähnen (41), die in äußere wendelförmige Zähne (45) an der inneren Nabe eingreifen, um eine Axialbewegung der inneren Nabe entgegen der Vorspannung von Druckfedern (47) bei Drehung der äußeren Nabe bezüglich der inneren Nabe zu verursachen, und einem radialen Flansch (14) mit unter gleichem Abstand darin angeordneten Fenstern (15); des weiteren mit einer Kupplungsplatte (17), die am äußeren Umfang Reibbeläge (26) trägt, einer Federhalteplatte (28), die an der Kupplungsplatte befestigt ist, um den radialen Flansch dazwischen einzuklemmen, wobei die Kupplungs- und Federhalteplatte in Umfangsrichtung beabstandete Fenster (19, 32) aufweisen, die zu den Federfenstern im radialen Flansch axial ausgerichtet sind, und Dampferfedern (49), die im jedem Satz axial ausgerichteter Federfenstern in der Kupplungs- und Federhalteplatte und dem radialen Flansch aufgenommen werden; dadurch gekennzeichnet, daß eine zweite innere Nabe (11) vorgesehen ist, deren Nabentrommel (12) eine innen axial verkeilte Öffnung zur Aufnahme der Getriebewelle aufweist, daß die Druckfedern die erstgenannte und zweite innere Nabe auseinanderdrückt, daß die radiale Flansch einstückig mit der Nabentrommel der zweiten inneren Nabe ausgebildet ist, daß die Federfenster im radialen Flansch Umfangsnuten (15) sind, die sich in Umfangsrichtung über die Federfenster in der Kupplungs- und Federhalteplatte hinaus erstrecken, um eine begrenzte Drehung der Kupplungs- und Federhalteplatte und der Dämpferfedern bezüglich der zweiten inneren Nabe ohne Zusammendrücken der Dämpferfeder zuzulassen, daß die äußere Nabe einen radialen Flansch (37) besitzt, der zwischen der Kupplungsplatte und dem radialen Flansch der zweiten inneren Nabe angeordnet ist, und daß der radiale Flansch der äußeren Nabe in einem Umfang mit Nuten (38) endet, die die Dämpferfedern umgeben, so daß die Drehung der Platten und Dämpferfedern bezüglich der zweiten inneren Nabe eine Drehung der äußeren Nabe bezüglich der ersten inneren Nabe verursacht.

2. Anordnung nach Anspruch 1, gekennzeichnet durch axial ausgerichtete zugewandte Taschen (46, 48), die in der ersten inneren Nabe (42) und der zweiten inneren Nabe (11) ausgeformt sind, wobei die Druckfedern (47), die die erste und zweite innere Nabe auseinanderdrücken, in den Taschen aufgenommen werden.

3. Anordnung nach Anspruch 1 oder 2, dadurch gekennzeichnet, daß die Nuten (15) des Flansches der zweiten inneren Nabe radial nach innen gekrümmte Schlitze (16) besitzen und daß nach hinten sich erstreckende Nasen (39), die am Flansch (37) der äußeren Nabe ausgebildet sind, in die Schlitze hineinragen.

4. Anordnung nach Anspruch 3, dadurch gekennzeichnet, daß die gekrümmten Schlitze (16) in einer Richtung in Umfangsrichtung über die Nasen (39) hinaus verlaufen, um einen begrenzten Totgang zuzulassen, wenn die Kupplungs- und Federhalteplatten (17, 28) sich bezüglich der zweiten inneren Nabe (11) drehen.

5. Anordnung nach einem der vorhergehenden Ansprüche, dadurch gekennzeichnet, daß die ineinandergreifenden wendelförmigen Zähne (41, 45) unter einem Winkel von 45° linksgängig sind.

6. Anordnung nach einem der vorhergehenden Ansprüche dadurch gekennzeichnet, daß die erste innere Nabe (42) einen radialen Flansch (44) besitzt, der in den wendelförmigen Zähnen (45) endet.

## Revendications

1. Ensemble amortisseur d'embrayage pour embrayage de véhicule automobile, l'ensemble amortisseur d'embrayage comprenant un moyeu assemblé à plusieurs parties (14, 36, 42) ayant un moyeu intérieur (42) avec des cannelures intérieures axiales (43) pour recevoir un arbre d'entrée de transmission cannelé extérieurement dans le sens axial, un moyeu extérieur (36) ayant des dents intérieures hélicoïdales (41) en prise avec des dents extérieures hélicoïdales (45) du moyeu intérieur pour provoquer un mouvement axial du moyeu intérieur à l'encontre de la sollicitation exercée par des ressorts de compression (47) lors de la rotation du moyeu extérieur par rapport au moyeu intérieur, et un flasque radial (14) dans lequel sont formées des fenêtres (15) espacées de la même distance; l'ensemble amortisseur d'embrayage comprenant en outre une plaque d'embrayage (17) supportant des garnitures de friction (26) à sa périphérie extérieure, une plaque de retenue de ressort (28) fixée à la plaque d'embrayage pour enserrer le flasque radial, les plaques d'embrayage et de retenue de ressort présentant des fenêtres espacées circonférentiellement (19, 32) en alignement axial avec les fenêtres à ressort dans le flasque radial, et des ressorts d'amortisseur (49) reçus dans chaque jeu de fenêtres pour ressort alignées axialement dans les plaques d'embrayage et de retenue de ressort et le flasque radial, caractérisé par la présence d'un second moyeu intérieur (11) dont le cylindre (12) comporte une ouverture cannelée intérieurement dans le sens axial afin de recevoir l'arbre de transmission, les ressorts de compression sollicitent pour les écarter le moyeu intérieur cité en premier et le second moyeu, le flasque radial est en une pièce avec le cylindre du second moyeu intérieur, les fenêtres à ressort dans le flasque radial sont des encoches périphériques (15) qui s'étendent circonférentiellement au-delà des fenêtres pour ressort dans les plaques d'embrayage et de retenue de ressort afin de permettre une rotation limitée des plaques d'embrayage et de retenue de ressort et des ressorts d'amortisseur par rapport au second moyeu intérieur sans compression des ressorts d'amortisseur, le moyeu extérieur a un flasque radial (37) situé entre la plaque d'embrayage et le flasque radial du second moyeu intérieur, et le flasque radial du moyeu extérieur se termine dans une périphérique avec des encoches (38) enfermant les ressorts d'amortisseur de sorte que la rotation des plaques et des ressorts d'amortisseur par rapport au second moyen intérieur provoque la rotation du moyeu extérieur par rapport au premier moyeu intérieur.

2. Ensemble amortisseur d'embrayage selon la revendication 1, comprenant des alvéoles en regard alignées dans le sens axial (46, 48) formées dans le premier moyeu intérieur (42) et dans le second moyeu intérieur (11), les ressorts de compression (47) sollicitant pour les écarter les premier et second moyeux intérieurs étant reçus dans les alvéoles.

3. Ensemble amortisseur d'embrayage selon la revendication 1 ou la revendication 2, dans lequel les encoches (15) du flasque du second moyeu intérieur ont des fentes (16) en forme d'arc dirigées radialement vers l'intérieur, et des pattes (39) s'étendant vers l'arrière formées sur le flasque du moyeu extérieur (37) sont en saillie dans les fentes.

4. Ensemble amortisseur d'embrayage selon la revendication 3, dans lequel les fentes en forme d'arc (16) s'étendent circonférentiellement au-delà des pattes (39) dans une direction pour permettre un mouvement perdu limité lorsque les plaques d'embrayage et de retenue de ressort (17, 28) tournent par rapport au second moyeu intérieur (11).

5. Ensemble amortisseur d'embrayage selon l'une quelconque des revendications précédentes, dans lequel les dents hélicoïdales en prise (41, 45) sont des dents à pas à gauche à 45°.

6. Ensemble amortisseur d'embrayage selon l'une quelconque des revendications précédentes, dans lequel le premier moyeu intérieur (42) comporte un flasque radial (44) se terminant dans les dents hélicoïdales (45).

Fig.1

0 146 253

*Fig.2.*

*Fig.3.*

*Fig.4.*

*Fig.5.*

2

Fig.6.

Fig.7.

Fig.8.

Fig.9.

Fig.10.